Europäisches Patentamt

European Patent Office

Office européen des brevets

(11) Numéro de publication : **0 028 957**
**B1**

(12) FASCICULE DE BREVET EUROPÉEN

(45) Date de publication du fascicule du brevet :
19.12.84

(51) Int. Cl.³ : **B 41 J 3/20**, H 04 N 1/40

(21) Numéro de dépôt : 80401507.1

(22) Date de dépôt : 23.10.80

(54) **Dispositif de restitution de nuances utilisant une tête d'impression thermique et système d'impression thermique comportant un tel dispositif.**

(30) Priorité : 09.11.79 FR 7927711

(43) Date de publication de la demande :
20.05.81 Bulletin 81/20

(45) Mention de la délivrance du brevet :
19.12.84 Bulletin 84/51

(84) Etats contractants désignés :
DE GB NL

(56) Documents cités :
US-A- 3 604 846
US-A- 3 715 475
US-A- 3 739 084
US-A- 3 964 388
US-A- 3 975 707
US-A- 4 039 065
US-A- 4 071 849
US-A- 4 074 319
US-A- 4 113 391

(73) Titulaire : THOMSON-CSF
173, Boulevard Haussmann
F-75379 Paris Cedex 08 (FR)

(72) Inventeur : Regnault, Luc
"THOMSON-CSF" SCPI 173, bld Haussmann
F-75360 Paris Cedex 08 (FR)

(74) Mandataire : Turlèque, Clotilde et al
THOMSON-CSF SCPI 173, Bld Haussmann
F-75379 Paris Cedex 08 (FR)

## Description

La présente invention concerne les dispositifs de restitution de nuances utilisant une tête d'impression thermique, et en particulier les systèmes d'impression thermique.

La technique d'impression thermique pour l'inscription d'un point consiste à appliquer à une micro résistance une tension pendant un temps très court, par exemple 5 millisecondes, de sorte que cette résistance impressionne un papier thermosensible par son élévation en température.

Par cette technique, il est connu de réaliser des dispositifs de reproduction de points noirs de dimensions sensiblement égales à celle de la résistance et d'une densité optique correspondant à la densité maximale que le papier permet d'obtenir, afin de réaliser une inscription en noir et blanc.

Dans le but de reproduire des documents comportant des nuances, le brevet américain US-A-4 071 849 décrit une tête d'impression thermique comportant n résistances chauffantes couplées respectivement à un dispositif d'alimentation générant des impulsions de durée variable pour reproduire diverses nuances de gris. Par ailleurs, le brevet américain US-A-3 715 475 décrit un dispositif pour analyser ligne par ligne une image et la reproduire avec des demi-nuances, sur une imprimante noir et blanc, grâce à un dispositif de commande de l'imprimante générant des séquences d'impulsions dont le rapport cyclique est variable en fonction de la nuance à reproduire. Chaque valeur de gris est reproduite par une ligne noire discontinue qui est intégrée en une tache grise par l'œil de l'observateur. Les valeurs de gris d'une ligne sont traitées l'une après l'autre par ce dispositif de commande, ce qui est un procédé lent.

L'objet de l'invention est de réaliser une impression en nuances, sur un papier thermosensible, par un dispositif permettant de commander simultanément tous les points d'une tête d'impression thermique, dont la largeur correspond à une ligne du balayage d'analyse, pour obtenir une grande vitesse d'impression.

L'objet de l'invention est un dispositif de restitution de p nuances (p entier positif) pour reproduire un document dont les variations de nuance sont analysées ligne par ligne et sont traduites par des variations d'amplitude d'un signal analogique, ce dispositif comportant :
— un échantillonneur prélevant n échantillons de ce signal pour chaque ligne d'analyse ;
— un convertisseur analogique numérique comparant la valeur de chaque échantillon par rapport à p intervalles d'amplitude correspondant aux p nuances à restituer, et délivrant un nombre binaire de q bits (q entier positif) ;
— des moyens de commande recevant successivement n nombres binaires correspondant à l'analyse d'une ligne de document et fournissant n signaux de commande dont les durées sont respectivement fonctions des n nombres binaires ;
— un dispositif d'alimentation recevant les n signaux de commande ;
— une tête d'impression alimentée par le dispositif d'alimentation ;
caractérisé en ce que les moyens de commande comportent :
— un ensemble de registres mémoires à décalage $M_i$ ayant q entrées pour recevoir les q bits de chacun des n nombres binaires et ayant n sorties respectivement couplées à n entrées du dispositif d'alimentation et délivrant simultanément les n bits de même poids des n nombres binaires reçus, et une entrée auxiliaire recevant un signal de commande auxiliaire pour commander la durée pendant laquelle les bits de même poids doivent être délivrés par les n sorties de l'ensemble de registres mémoire à décharge $M_i$ ;
— un dispositif de commande générant le signal de commande auxiliaire ;
et en ce que la tête d'impression thermique comporte n résistances chauffantes $R_i$ (i = 1 à n) couplées respectivement à n sorties du dispositif d'alimentation.

L'invention sera mieux comprise et d'autres caractéristiques apparaîtront à l'aide de la description ci-après et des dessins s'y rapportant, sur lesquels :

la figure 1 est un exemple de réalisation du dispositif selon l'invention ;

la figure 2 représente la variation de la densité optique d'un point en fonction du temps de chauffe d'une résistance.

Les signaux d'horloge et les dispositifs de synchronisation précise, relevant de la technologie courante, n'ont pas été représentés en vue de rendre les dessins plus clairs et de simplifier l'exposé.

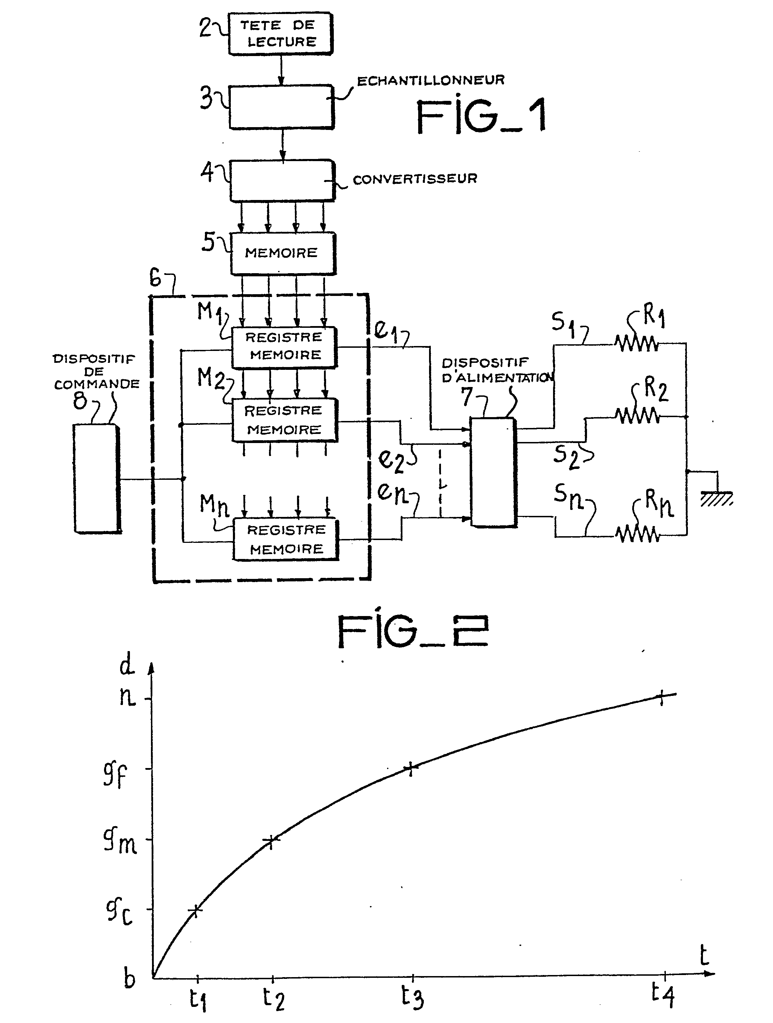

Sur la figure 1, une tête de lecture 2 est couplée à l'entrée d'un convertisseur analogique numérique 4 à travers un échantillonneur 3. Les quatre sorties du convertisseur 4 sont respectivement reliées à quatre entrées d'un registre mémoire à décalage $M_n$ à travers une mémoire tampon 5 et n − 1 registres mémoire à décalage $M_j$ disposés en série (j variant de 1 à n − 1, n entier positif). Chacun des n registres $M_i$ (i variant de 1 à n) comporte une entrée auxiliaire connectée à la sortie d'un dispositif de commande 8, et une sortie auxiliaire reliée à une entrée correspondante $e_i$ d'un dispositif d'alimentation 7. Chacune des n sorties $s_i$ de ce dispositif d'alimentation 7 est couplée à la masse à travers une résistance correspondante $R_i$.

Les n registres mémoire $M_i$ constituent un ensemble de registres mémoire à décalage 6. Cet ensemble 6 et le dispositif de commande 8 forment des moyens de commande du dispositif d'alimentation 7.

L'exemple de réalisation décrit permet de restituer les cinq nuances suivantes : blanc, gris clair, gris moyen, gris foncé et noir. A chacune de ces nuances est associé un temps de chauffe. Ce temps de chauffe est le temps pendant lequel une résistance doit être alimentée pour restituer, sur une feuille de papier thermosensible, la teinte associée. Expérimentalement, il a été établi que la loi reliant la densité optique au temps de chauffe est une loi logarithmique.

Sur la figure 2, est représentée la densité optique d'un point obtenu sur une feuille en fonction du temps de chauffe de la résistance associée au point. En ordonnée : $b$, $g_c$, $g_m$, $g_f$ et $n$ correspondent respectivement aux densités optiques du blanc, du gris clair, du gris moyen, du gris foncé et du noir. En abscisse : $t_1$, $t_2$, $t_3$ et $t_4$ correspondent aux temps de chauffe pour obtenir respectivement les densités $g_c$, $g_m$, $g_f$ et $n$.

Le fonctionnement de ce dispositif de restitution de nuances est le suivant :

La tête de lecture 2 analyse ligne par ligne un document et délivre un signal analogique dont les variations d'amplitude traduisent les variations de nuances du document. Pour chaque ligne analysée, ce signal analogique est échantillonné en $n$ échantillons par l'échantillonneur 3.

Dans notre exemple de réalisation, les cinq nombres binaires suivants : 0000, 0001, 0011, 0111, 1111 sont respectivement associés aux cinq nuances à reproduire : blanc, gris clair, gris moyen, gris foncé et noir.

Ainsi le convertisseur analogique numérique 4 convertit chaque échantillon en un nombre binaire de quatre bits associé à la nuance à reproduire. La mémoire tampon 5 mémorise les nombres binaires délivrés par le convertisseur pendant l'analyse d'une ligne. Ensuite les $n$ nombres binaires d'une ligne sont transmis rapidement à l'ensemble de registres mémoire à décalage 6. A la fin de ce transfert, chaque registre $M_i$ contient en mémoire le nombre binaire correspondant au $i^e$ échantillon de signal de la ligne analysée sur le document. Chaque sortie de ces registres $M_i$ délivrent alors le bit de poids le plus faible du nombre en mémoire. Le dispositif de commande 8 permet de commander simultanément le décalage des registres $M_i$, de sorte que chaque registre délivre chaque bit du nombre binaire en mémoire dans un ordre de poids croissant. De plus, cette commande de décalage est effectuée de façon que les bits de poids 0, 1, 2 et 3 soient respectivement délivrés par les registres $M_i$ pendant les temps $t_1$, $t_2 - t_1$, $t_3 - t_2$ et $t_4 - t_3$.

Chacune des sorties $s_i$ du dispositif d'alimentation 7 délivre une tension d'alimentation lorsque l'entrée correspondante $e_i$ de ce dispositif est au niveau logique 1. Chacune des résistances $R_i$ peut donc être chauffée pendant un temps égal soit à $t_1$, soit à $t_2$, soit à $t_3$, soit à $t_4$.

Par exemple, pour un échantillon $e_v$ du signal analogique correspondant à une nuance gris foncé ($v$ entier compris entre 1 et $n$), il est associé, par le convertisseur 4, le nombre binaire 0111. La résistance $R_v$ sera chauffée pendant le temps $t_1 + t_2 - t_1 + t_3 - t_2$ égal à $t_3$. Ce temps de chauffe $t_3$ correspondant, d'après la courbe représentée sur la figure 2, à une couleur gris foncé, il sera reproduit par la résistance $R_v$, sur une feuille de papier thermosensible, la nuance gris foncé.

L'invention n'est pas limitée au mode de réalisation décrit et représenté, en particulier le dispositif est susceptible de variantes.

En effet, il est à la portée de l'homme de l'art de concevoir un ensemble de registres mémoire à décalage 6 différent de celui décrit.

De plus, le dispositif est susceptible de reproduire un nombre quelconque de nuances ; pour cela le nombre de bits du nombre binaire associé à chaque nuance peut être soit augmenté, soit diminué.

L'invention peut aussi s'appliquer lorsque les résistances ne sont pas chauffées individuellement mais par paquets.

Enfin, il apparaît que les fonctions effectuées par le convertisseur 4, la mémoire morte 5, l'ensemble de registres mémoire 6 et le dispositif de commande 8 peuvent être réalisées à l'aide d'un microordinateur.

## Revendications

1. Dispositif de restitution de $p$ nuances ($p$ entier positif) pour reproduire un document dont les variations de nuance sont analysées ligne par ligne et sont traduites par des variations d'amplitude d'un signal analogique, ce dispositif comportant :

— un échantillonneur (3) prélevant $n$ échantillons de ce signal pour chaque ligne d'analyse ;

— un convertisseur analogique-numérique (4) comparant la valeur de chaque échantillon par rapport à $p$ intervalles d'amplitude correspondant aux $p$ nuances à restituer, et délivrant un nombre binaire de $q$ bits ($q$ entier positif) ;

— des moyens de commande (6 et 8) recevant successivement $n$ nombres binaires correspondant à l'analyse d'une ligne de document et fournissant $n$ signaux de commande dont les durées sont respectivement fonctions des $n$ nombres binaires ;

— un dispositif d'alimentation (7) recevant les $n$ signaux de commande ;

— une tête d'impression alimentée par le dispositif d'alimentation (7) ;

caractérisé en ce que les moyens de commande comportent :

— un ensemble (6) de registres mémoires à décalage $M_i$ ayant $q$ entrées pour recevoir les $q$ bits de chacun des $n$ nombres binaires et ayant $n$ sorties respectivement couplées à $n$ entrées du dispositif d'alimentation (7) et délivrant simultanément les $n$ bits de même poids des $n$ nombres binaires reçus, et une entrée auxiliaire recevant un signal de commande auxiliaire pour commander la durée pendant laquelle les bits de même poids doivent être délivrés par les $n$ sorties de l'ensemble de registres mémoires à décalage $M_i$ ;

— un dispositif de commande (8) générant le signal de commande auxiliaire ;

et en ce que la tête d'impression est thermique et comporte n résistances chauffantes $R_i$ ($i = 1$ à n) couplées respectivement à n sorties du dispositif d'alimentation (7).

2. Dispositif de restitution selon la revendication 1, caractérisé en ce que le signal de commande auxiliaire généré par le dispositif de commande (8) est tel que les bits de même poids w ($0 \leqslant w \leqslant q - 1$, w entier positif) sont délivrés par l'ensemble de registres mémoires $M_i$ pendant une durée $t_1^{w+1} - t_1^r$, $t_1^r$ prenant la valeur 0 pour w égal à 0 et la valeur $t_1$ pour w différent de 0, $t_1$ étant la durée pendant laquelle une résistance doit être chauffée pour obtenir la demi-nuance la plus claire désirée.

3. Système d'impression thermique comportant un dispositif de restitution de nuance selon l'une des revendications 1 et 2.

## Claims

1. Device for the restitution of p shades (p being a positive whole number) to reproduce a document whose shade variations are analyzed line by line and are translated by the amplitude variations of the analogical signal, this device comprising :
— a sampler (3) taking n samples of the signal for each line analyzed ;
— an analogical-numerical convertor (4) comparing the values of each sample with respect to p amplitude intervals corresponding to the p shades to be restituted, and delivering a binary number of q bits (q being a positive whole number) ;
— control means (6 and 8) successively receiving n binary numbers corresponding to the analysis of one document line and supplying n control signals whose lenghts are respectively functions of the n binary numbers ;
— a feeding device (7) receiving the n control signals ;
— a printing head fed by the feeding device (7) ;
characterized in that the control means comprise of :
— a set (6) of shift register memories $M_i$, having inputs to receive the q bits of each of the n binary numbers and having n outputs respectively connected to the n inputs of the feeding device (7) and simultaneously delivering the n bits of the same weight as the n binary numbers received, and an auxiliary input receiving an auxiliary control signal to control the time during which the bits of the same weight have to be supplied by the n outputs of the shift register memory $M_i$ set ;
— a control device (8) generating the auxiliary control signal ;
and in that the printing head is thermal and comprises n heating resistances $R_i$ ($i = 1$ to n) respectively connected to n output of the feeding device (7).

2. Restitution device according to claim 1, wherein the auxiliary control signal generated by the control device (8) is such that the bits of the same weight w ($0 \leqslant w \leqslant q - 1$, w being a positive whole number) are delivered by the whole set of memory registers $M_i$ during a length of time $t_1^{w+1} - t_1^r$, $t_1^r$ taking the value 0, and the value $t_1$ for w other than 0, $t_1$ being the length of time during which a resistance has to be heated to obtain the lightest half-shade desired.

3. Thermal impression system comprising a shade restitution device according to any one of claims 1 and 2.

## Ansprüche

1. Vorrichtung zur Wiedergabe von p Tönung (p eine ganze positive Zahl) um ein Dokument zu reproduzieren, dessen Tönung-Variationen zeilenweise analysiert und durch Amplitude-Variationen eines Analog-Signals umgesetzt werden, wobei die Vorrichtung folgendes aufweist :
— einen Abtaster (3), welcher n Abtastungen dieses Signals für jede analysierte Zeile entnimmt ;
— einen Analog-Digital-Umsetzer (4), der den Wert jeder Abtastungen mit p Amplituden-Intervallen vergleicht, die den p zu wiedergebenden Tönung entspricht, und eine binäre Zahl von q Bit (q eine ganze positive Zahl) liefert ;
— Steuermitteln (6 und 8), welche hintereinander n der Analyse einer Dokumenten-Zeile entsprechende binäre Zahlen empfangen und welche n Steuersignale liefern, deren Dauer jeweils Funktion der n binären Zahlen ist ;
— eine die n Steuersignale empfangende Speisevorrichtung (7) ;
— einen durch die Speisungsvorrichtung (7) gespeiste Druckkopf ;
dadurch gekenzeichnet, dass die Steuermittel folgendes beinhalten :
— eine Gesamtheit (6) von Verschiebungs-Speicher-Registern $M_i$, die q Eingänge aufweist, um die q Bit jeder der n binären Zahlen zu empfangen und die n Ausgänge aufweist, die jeweils mit n Eingängen der Speisevorrichtung (7) verbunden sind und die gleichzeitig die gleichgewichtigen n Bit der n empfangenen binären Zahlen liefert und einen Hilfseingang aufweist, welcher ein Hilfssteuersignal empfängt, um die Dauer zu steuern, während der die gleichgewichtigen Bit über die n Ausgänge der Gesamtheit von Verschiebungs-Speicher-Registern $M_i$ geliefert werden sollen ;
— eine Steuervorrichtung (8), welche das Hilfssteuersignal erzeugt ;
und dadurch, dass der Druckkopf thermisch ist und n Heizwiderstände $R_i$ ($i = 1$ bis n) aufweist, die jeweils an n Ausgänge der Speisevorrichtung (7) gekoppelt sind.

2. Wiedergabevorrichtung nach Anspruch 1, dadurch gekennzeichnet, dass das durch die Steuervorrichtung (8) erzeugte Hilfssteuersignal solcher Art ist, dass die gleichwertigen Bit w ($0 \leqslant w \leqslant q - 1$, w eine ganze positive Zahl) durch die Gesamtheit von Speicherregistern $M_i$ während einer Dauer $t_1^{w+1} - t_1^r$ geliefert werden, wobei $t_1^r$ den Wert 0 für w gleich 0 und den Wert $t_1$ für w ungleich 0 nimmt, wobei $t_1$ die Dauer ist, während der ein Widerstand geheizt werden soll, um die hellste gewünschte Halb-Tönung zu erhalten.

3. Thermisches Drucksystem, welches eine Nuance-Widergabevorrichtung nach einem der Ansprüche 1 bis 2 aufweist.

0 028 957

FIG_1

FIG_2

1